Europäisches Patentamt

European Patent Office

Office européen des brevets

(19)

(11) **EP 1 108 165 B1**

(12) **EUROPÄISCHE PATENTSCHRIFT**

(45) Veröffentlichungstag und Bekanntmachung des Hinweises auf die Patenterteilung:
**07.08.2002 Patentblatt 2002/32**

(51) Int Cl.[7]: **F16H 61/02**

(21) Anmeldenummer: **99946057.9**

(22) Anmeldetag: **28.08.1999**

(86) Internationale Anmeldenummer:
**PCT/EP99/06352**

(87) Internationale Veröffentlichungsnummer:
**WO 00/14435 (16.03.2000 Gazette 2000/11)**

(54) **VERFAHREN ZUR ERMITTLUNG EINER ANFAHR-GANGSTUFE**

METHOD FOR DETERMINING A STARTING GEAR STEP

PROCEDE PERMETTANT DE DETERMINER UN RAPPORT DE VITESSE DE DEMARRAGE

(84) Benannte Vertragsstaaten:
**DE FR SE**

(30) Priorität: **02.09.1998 DE 19839838**

(43) Veröffentlichungstag der Anmeldung:
**20.06.2001 Patentblatt 2001/25**

(73) Patentinhaber: **ZF FRIEDRICHSHAFEN Aktiengesellschaft**
**88038 Friedrichshafen (DE)**

(72) Erfinder:
• **WOLF, Andreas**
**D-86213 Ravensburg (DE)**

• **WINKEL, Matthias**
**D-88250 Weingarten (DE)**
• **RÜCHARDT, Christoph**
**D-88239 Wangen (DE)**
• **WENGERT, Bertram**
**D-88677 Markdorf (DE)**
• **MÜLLER, Jürgen**
**D-88045 Friedrichshafen (DE)**

(56) Entgegenhaltungen:
**EP-A- 0 120 189      EP-A- 0 268 686**
**DE-A- 3 334 718      US-A- 5 406 862**

EP 1 108 165 B1

**Beschreibung**

Die Erfindung betrifft ein Verfahren zur Ermittlung einer Anfahr-Gangstufe für ein Fahrzeug mit einem Stufenwechselgetriebe mit mehreren Gangstufen.

Insbesondere bei schweren Nutzfahrzeugen mit vielgängigen Stufenwechselgetrieben sind verschiedene Gangstufen zum Anfahren geeignet, von denen beladungs- und fahrzustandsabhängig eine Gangstufe als Anfahr-Gangstufe gewählt wird.

Beispielsweise kann es bei einem unbeladenen Nutzfahrzeug mit einem 16-Gang-Getriebe auf ebener Strecke für ein optimales Fortkommen vorteilhaft sein, den fünften Gang als Anfahr-Gangstufe zu wählen, während es bei voll beladenem Fahrzeug in einer Steigungsstrecke erforderlich sein kann, im ersten oder zweiten Gang anzufahren. Wird in einer Fahrsituation eine zu kleine Anfahr-Gangstufe gewählt, hat dies unnötig viele Gangwechsel zur Folge. Wird die Anfahr-Gangstufe zu groß gewählt, dauert der Anfahr-Vorgang mit der Folge einer höheren Belastung der Anfahr-Kupplung länger oder muß gar wieder abgebrochen werden, wenn die zur Verfügung stehende Zugkraft im gewählten Anfahr-Gang nicht ausreichend ist.

Während bei Fahrzeugen mit herkömmlichen mechanischen Stufenwechselgetrieben der Fahrer die Anfahr-Gangstufe wählt, finden Verfahren zur Ermittlung einer Anfahr-Gangstufe vorzugsweise bei automatisierten Stufenwechselgetrieben und lastschaltbaren Automatik-Getrieben Anwendung. Hierbei ist es möglich, die passende Anfahr-Gangstufe von einer elektronischen Steuerungseinrichtung ermitteln zu lassen und dem Fahrer beispielsweise über ein Display vorzuschlagen. Ein solches Display kann natürlich auch bei einem Fahrzeug mit einem herkömmlichen mechanischen Stufenwechselgetriebe für den Fahrer hilfreich sein. Natürlich ist es auch möglich, diesen berechneten Anfahr-Gang auch von einem automatisierten Stufengetriebe bzw. Lastschaltgetriebe beim Erreichen des Fahrzeugstillstands automatisch einlegen zu lassen.

Die gattungsbildende US 5,406,862 offenbart ein Verfahren zur Ermittlung einer Anfahr-Gangstufe, bei welchem die Anfahr-Gangstufe von einer elektronischen Steuerungseinrichtung, abhängig von der Fahrzeugmasse und der Fahrbahnsteigung, ermittelt wird. Die fahrzustandsabhängige Fahrbahnsteigung wird mit einem Neigungssensor gemessen, während die Fahrzeugmasse abhängig von Fahrbahnsteigung und Fahrzeugbeschleunigung bestimmt wird.

Die passende Anfahr-Gangstufe ist in einem Kennfeldspeicher, abhängig von Fahrzeugmasse und Fahrbahnsteigung, abgelegt.

Ausgehend von diesem Stand der Technik ist die Aufgabe der Erfindung, ein Verfahren zur Ermittlung einer Anfahr-Gangstufe dahingehend weiterzuentwickeln, daß kein Neigungssensor benötigt wird.

Die Erfindung wird durch ein die Merkmale des Hauptanspruchs aufweisendes Verfahren gelöst. Vorteilhafte Ausgestaltungen sind in den Unteransprüchen enthalten.

Während in dem eingangs genannten, bekannten Verfahren der Steigungswiderstand, der eine fahrzustandsabhängige Größe ist, mit Hilfe eines Neigungssensors ermittelt wird, wird die fahrzustandsabhängige Größe gemäß der Erfindung aus der Fahrzeugmasse, einer aktuellen Zugkraft und einer daraus resultierenden aktuellen Fahrzeugbeschleunigung ermittelt, während sich das Fahrzeug bewegt.

In einer vorteilhaften Ausgestaltung des Verfahrens umfaßt die fahrzustandsabhängige Größe neben dem Steigungswiderstand des Fahrzeugs außerdem den Rollwiderstand des Fahrzeugs, der auch beim Anfahr-Vorgang wirkt. Hierdurch wird der tatsächliche Fahrwiderstand, der sich beim Anfahr-Vorgang hauptsächlich aus dem Steigungswiderstand und dem Rollwiderstand des Fahrzeugs zusammensetzt, besser nachgebildet. Der Luftwiderstand kann beim Anfahr-Vorgang vernachlässigt werden.

Aus den Größen Fahrzeugmasse $M_{Fzg}$, aktueller Zugkraft $F_{Zug}$ und der Fahrzeugbeschleunigung $a_{Fzg}$ kann der Fahrwiderstand, der gleich der Summe aus Roll- und Steigungswiderstand ist, durch Lösen der Bewegungsgleichung berechnet werden.

Die Fahrzeugmasse kann vom Fahrer eingegeben oder auch mit Sensoren im Fahrwerk gemessen werden. Besonders vorteilhaft wird sie jedoch unter Verwendung von üblicherweise vorhandenen Raddrehzahlsensoren durch ein Verfahren ermittelt, bei welchem während zwei zeitlich versetzten Messungen innerhalb eines Meßzeitraums jeweils eine Zugkraft-Größe und eine daraus resultierende Bewegungsgröße ermittelt wird.

Aus der EP 0 666 435 A2 ist ein derartiges Verfahren bekannt, welches zwei zeitlich versetzte Messungen der vom Antriebsmotor erzeugten Zugkraft und die daraus resultierende Beschleunigung umfaßt. Es wird davon ausgegangen, daß der unbekannte Fahrwiderstand bei zwei aufeinanderfolgenden Messungen im wesentlichen für beide Messungen gleich ist, so daß diese unbekannten Größen herausgekürzt werden können. Bei diesem bekannten Verfahren werden sowohl während einer Zugkraft-Phase als auch während einer zugkraftfreien Phase, während der eine Kupplung zum Zweck einer Gangschaltung eines Stufenwechselgetriebes geöffnet ist, jeweils ein Wert eines Raddrehmoments sowie ein Wert einer Fahrzeugbeschleunigung ermittelt, woraus die aktuelle Masse des Fahrzeugs berechenbar ist.

Als besonders vorteilhaft hat sich erwiesen, wenn die erste der beiden Messungen einen ersten Datenerfassungszeitraum umfaßt, die zweite der beiden Messungen einen zweiten Datenerfassungszeitraum umfaßt, die Dauer der beiden Datenerfassungszeiträume größer ist als eine Mindestdauer, die Zugkraft-Größe dem zeitlichen Integral der während des jeweiligen Datenerfassungszeitraums wirkenden Zugkraft entspricht

und die Bewegungsgröße der während des jeweiligen Datenerfassungszeitraums erfolgten Geschwindigkeitsänderung des Fahrzeugs entspricht. Wird dieses Verfahren zur Massenbestimmung zugrunde gelegt, kann die Anfahr-Gangstufe ermittelt werden, ohne daß hierfür ein zusätzlicher Sensor benötigt wird.

Dem Verfahren zur Massenbestimmung liegt die folgende Gleichung zugrunde:

$$M_{Fzg} = \frac{\int\limits_{t_0}^{t_1} F_{Zug}\, dt \;-\; M_{Gang}\,(v_1 - v_0)}{(v_1 - v_0 - v_3 + v_2)}$$

Darin sind:

| | |
|---|---|
| $M_{Fzg}$ | die zu ermittelnde Fahrzeugmasse in kg, |
| $F_{Zug}$ | die Zugkraft bzw. das zum Rad gerechnete Motormoment in N, |
| $M_{gang}$ | eine Korrekturgröße, die der Summe der Massenträgheitsmomente von Motor, Kupplung und Stufenwechselgetriebe, reduziert auf die translatorische Bewegung, des Fahrzeugs entspricht, in kg, |
| $t_0$, $t_1$ | Anfangs- und Endzeitpunkt der Zugkraft-Phase, |
| $v_0$, $v_1$ | die Geschwindigkeiten des Fahrzeugs zu Beginn und am Ende der Zugkraft-Phase in m/s, |
| $v_2$, $v_3$ | die Geschwindigkeiten zu Beginn und am Ende der zugkraftfreien Phase in m/s. |

An dieser Stelle wird auf die nicht vorveröffentlichte ältere Patentanmeldung DE 198 37 380.5 der Anmelderin verwiesen, welche ein Verfahren zur Massenermittlung zum Gegenstand hat. Deren Inhalt wird als zum Offenbarungsgehalt der vorliegenden Anmeldung gehörig erklärt.

In einer Ausgestaltung des erfindungsgemäßen Verfahrens wird die Anfahr-Gangstufe abhängig von einem zum Anfahren zur Verfügung stehenden Motormoment, einer maximalen Rutschzeit und/oder einer maximalen Reibarbeit der Anfahr-Kupplung während des Anfahr-Vorgangs ermittelt. Hierzu werden zunächst das zur Verfügung stehende Motormoment, ein maximal zulässiger Wert für eine Rutschzeit und/oder ein maximal zulässiger Wert für eine Reibarbeit der Anfahr-Kupplung während des Anfahr-Vorgangs ermittelt. Beginnend mit einer höchsten, zum Anfahren geeigneten Gangstufe werden dann in einer Berechnungsschleife, abhängig von der Übersetzung der Gangstufe, der Fahrzeugmasse, dem Fahrwiderstand und einem zum Anfahren verfügbaren Motormoment, Werte für die Rutschzeit und/oder die Reibarbeit vorausberechnet. Die vorausberechneten Werte werden mit den zuvor ermittelten, maximal zulässigen Werten verglichen. Die Berechnungsschleife wird so lange mit der nächstkleineren, zum Anfahren geeigneten Gangstufe wiederholt, bis eine Gangstufe gefunden ist, bei welcher die vorausberechneten Werte kleiner oder gleich den maximal zulässigen Werten sind. Diese Gangstufe wird als Anfahr-Gangstufe ausgegeben.

Die maximal zulässigen Werte für die Rutschzeit und/oder die Reibarbeit werden vorteilhafterweise abhängig von der Fahrbahnsteigung, der Fahrzeugmasse und/oder dem Belastungszustand der Kupplung, der die Belastungshistorie der Kupplung berücksichtigt, in der elektronischen Steuerungseinrichtung - vorzugsweise in einem Kennfeldspeicher - abgelegt. Hierdurch wird eine hohe Sicherheit gegenüber Fehleinstellungen, welche zu Beschädigungen der Anfahr-Kupplung führen können, erzielt.

Ebenso kann auch das zum Anfahren verfügbare Motormoment, abhängig von der Fahrbahnsteigung und/oder der Fahrzeugmasse, abgelegt sein; nicht in allen Situationen muß unter voller Motorlast angefahren werden.

Das erfindungsgemäße Verfahren wird anhand der beiliegenden Zeichnungen näher erläutert. Es zeigen:

Fig. 1    ein Block-Schaubild des erfindungsgemäßen Verfahrens und

Fig. 2    ein Ablauf-Diagramm eines Teils des erfindungsgemäßen Verfahrens.

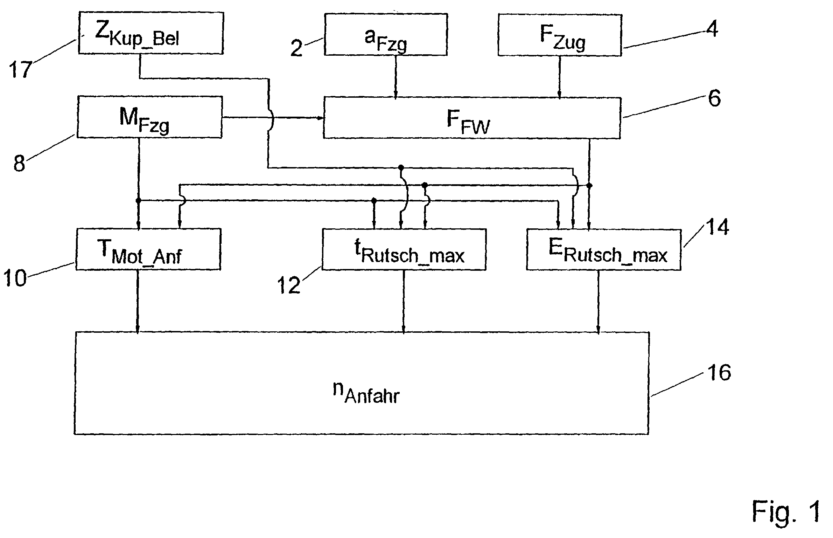

In Fig. 1 ist mit 6 der Block zur Berechnung des fahrzustandsabhängigen Fahrwiderstands aus Fahrzeugmasse 8, der an den Antriebsrädern wirkenden Zugkraft 4 und der daraus resultierenden Fahrzeugbeschleunigung 2 bezeichnet. Das zum Anfahren zur Verfügung stehende Motormoment 10, die während des Anfahr-Vorgangs maximal zulässige Rutschzeit der Anfahr-Kupplung 12 sowie die maximal zulässige Reibarbeit 14 werden, jeweils abhängig von der Fahrzeugmasse 8, dem aktuellen Fahrwiderstand 6 und einer den Belastungszustand der Kupplung beschreibenden Größe 17, ermittelt. Im Block 16 wird der Anfahr-Gang abhängig von diesen Größen 10, 12, 14 ermittelt.

Im einzelnen laufen in den Blöcken folgende Verfahrensschritte ab:

Die momentane Fahrzeugbeschleunigung aFzg 2 entspricht der zeitlichen Ableitung der Fahrzeuggeschwindigkeit, welche vorzugsweise von Raddrehzahlsensoren aufgenommen wird.

Die auf die Antriebsräder des Fahrzeugs wirkende Zugkraft Fzug wird ermittelt aus Motormoment und dem im jeweiligen Gang vorliegenden Übersetzungsverhältnis zwischen Motor und Antriebsrad, wobei auch Wirkungsgrade der einzelnen Komponenten des Triebstrangs berücksichtigt werden. Das Signal für das Motormoment wird vorzugsweise von der Motorsteuerung bereitgestellt oder kann alternativ aus der Stellung des Lastgebers, der Motordrehzahl und einem in der Steuerungseinrichtung abgelegten Motorkennfeld ermittelt werden.

Im Block 6 wird der Fahrwiderstand nach folgender Gleichung ermittelt,

$$F_{FW} = F_{Zug} - M_{Fzg} * a_{Fzg}$$

in der

$F_{Zug}$ die Zugkraft,
$M_{Fzg}$ die Fahrzeugmasse und
$a_{Fzg}$ die Fahrzeugbeschleunigung

sind.

Andererseits ist der Fahrwiderstand bei Vernachlässigung des Luftwiderstands auch gleich der Summe aus Steigungs- und Rollwiderstand,

$$F_{FW} = F_{Steig} + F_{Roll} = M_{Fzg} * g(\sin(\alpha) + k_{Roll0} \cos(\alpha))$$

wobei

$g$ die Erdbeschleunigung,
$\alpha$ der Steigungswinkel und
$k_{Roll\,0}$ der geschwindigkeitsunabhängige Rollwiderstandsbeiwert

sind.

Durch Gleichsetzen der beiden obigen Gleichungen läßt sich bei Bedarf auch der aktuelle Steigungswinkel $\alpha$ ermitteln.

Das zum Anfahren verfügbare Motormoment 10, die während des Anfahr-Vorgangs maximal zulässige Rutschzeit 12 sowie die maximal zulässige Reibarbeit 14 sind vorteilhafterweise in Kennfeldspeichern der elektronischen Steuerungseinrichtung, abhängig von der Fahrzeugmasse, dem Fahrwiderstand und dem Belastungszustand der Kupplung 17, abgelegt. Je größer Fahrzeugmasse und Fahrwiderstand sind und je kleiner die bisherige Kupplungsbelastung ist, desto größer sind die Werte der in den Kennfeldern abgelegten Größen. Über die in den Kennfeldern abgelegten Größen läßt sich die Belastung der Anfahr-Kupplung direkt beeinflussen und sicher nach oben begrenzen.

Der Belastungszustand der Kupplung kann beispielsweise anhand von Temperaturen oder anhand einer seit der letzten Kupplungsbelastung verstrichenen Zeit beschrieben werden. Insbesondere ist eine rechnerische Größe zur Beschreibung des Belastungszustandes geeignet, welche die über der Zeit an der Kupplung angefallene Reibleistung berücksichtigt, und welche länger zurückliegende Reibleistungen weniger stark bewertet, als zeitlich nahe zurückliegende Reibleistungen.

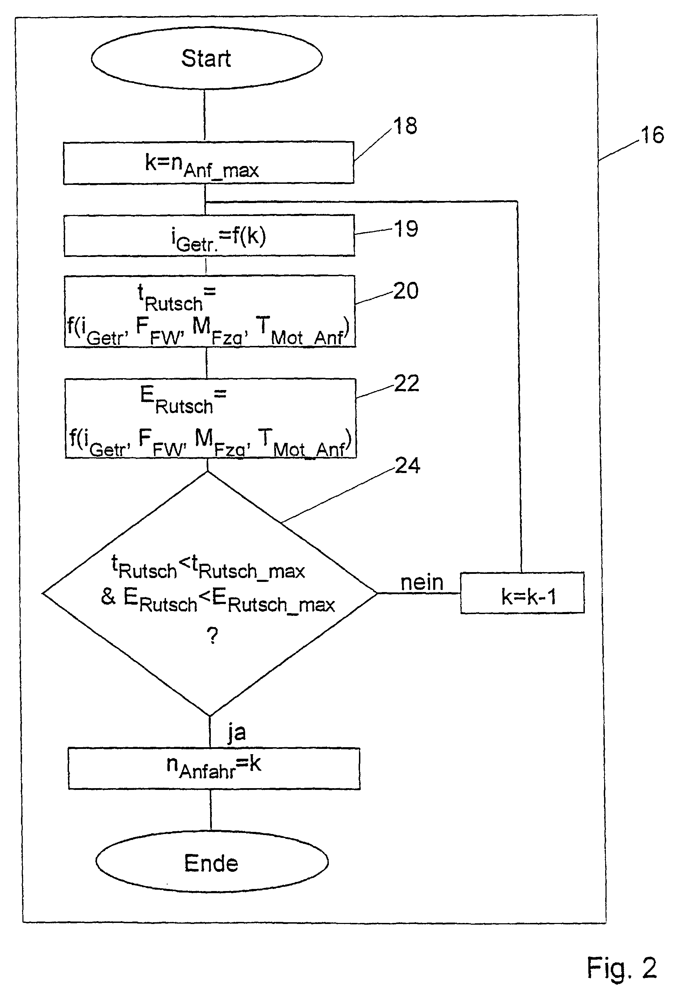

Der dem Block 16 zugrunde liegende Algorithmus zur Anfahr-Gangbestimmung wird anhand Fig. 2 erläutert. Die Zählvariable k wird im Block 18 zunächst gleich einem Wert gesetzt, der der höchsten zum Anfahren geeigneten Gangstufe entspricht. Im Block 19 wird die Getriebeübersetzung abhängig von der Gangstufe ermittelt. Die Getriebeübersetzungen der Gangstufen sind in der elektronischen Steuerungseinrichtung abgelegt. Abhängig von der Übersetzung der Gangstufe, der aktuellen Fahrzeugmasse, vom aktuellen Fahrwiderstand und von dem zur Verfügung stehenden Motormoment wird für diese Gangstufe jeweils ein voraussichtlicher Wert für die Rutschzeit 20 und die Reibarbeit 22 während des Anfahr-Vorgangs vorausberechnet. Im Block 24 werden diese vorausberechneten Werte mit den maximal zulässigen Werten 12, 14, die zuvor ermittelt wurden, verglichen. Sind die vorausberechneten Werte kleiner oder gleich den maximal zulässigen Werten, wird der aktuelle Wert der Zählvariable k als Anfahr-Gangstufe ausgegeben.

Wenn mindestens einer der vorausberechneten Werte größer ist als der zulässige Wert, wird die Berechnungsschleife mit der nächstkleineren, zum Anfahren geeigneten Gangstufe wiederholt.

Die Fahrwiderstandsberechnung wird, abgesehen von einigen Ausnahmefällen, auf die hier nicht näher eingegangen werden soll, während der Fahrt ständig, d. h. in kurzen Zeitabständen, durchgeführt, so daß dieses Verfahren immer bei Stillstand des Fahrzeugs eine geeignete Anfahr-Gangstufe bereitstellt.

Bezugszeichen

| | |
|---|---|
| 2 | Fahrzeugbeschleunigung |
| 4 | Zugkraft |
| 6 | Fahrwiderstand |
| 8 | Fahrzeugmasse |
| 10 | zum Anfahren zur Verfügung stehendes Motormoment |
| 12 | während des Anfahr-Vorgangs maximal zulässige Rutschzeit |
| 14 | während des Anfahr-Vorgangs maximal zulässige Reibarbeit |
| 16 | Algorithmus zur Anfahr-Gangbestimmung |
| 17 | Block |
| 18 | Block |
| 19 | Block |
| 20 | voraussichtliche Rutschzeit |
| 22 | voraussichtliche Reibarbeit |
| 24 | Block |

**Patentansprüche**

**1.** Verfahren zur Ermittlung einer Anfahr-Gangstufe für ein Fahrzeug mit einem Stufenwechselgetriebe mit mehreren Gangstufen,
wobei das Stufenwechselgetriebe antriebssseitig durch eine wahlweise schließbare Anfahr-Kupplung mit einem ein Motormoment erzeugenden Antriebsmotor verbindbar ist, und abtriebsseitig trieblich mit Antriebsrädern des Fahrzeugs verbunden ist, welche eine Zugkraft übertragen, wobei die Anfahr-Gangstufe von einer elektronischen Steuerungseinrichtung mindestens abhängig von der Fahrzeugmasse (8) und einer weiteren, fahrzustandsabhängigen Größe (6) ermittelt wird, welche den Steigungswiderstand des Fahrzeugs umfaßt, **dadurch gekennzeichnet, daß** ein aktueller Wert der weiteren, fahrzustandsabhängigen Größe (6) aus der Fahrzeugmasse (8), einer aktuellen Zugkraft (4) und einer daraus resultierenden aktuellen Fahrzeugbeschleunigung (2) während der Fahrt ständig ermittelt wird, und daß daraus bei Stillstand des Fahrzeugs eine geeignete Anfahr-Gangstufe ermittelt wird.

2. Verfahren nach Anspruch 1, **dadurch gekennzeichnet, daß** die weitere fahrzustandsabhängige Größe (6) auch den Rollwiderstand des Fahrzeugs umfaßt.

3. Verfahren nach einem der Ansprüche 1 oder 2, **dadurch gekennzeichnet, daß** die Fahrzeugmasse (8) mit einem Verfahren ermittelt wird, welches mindestens zwei zeitlich versetzte Messungen innerhalb eines Meßzeitraums umfaßt, durch die jeweils mindestens eine, vom Antriebsmotor erzeugte, die auf die Antriebsräder des Fahrzeugs in Bewegungsrichtung einwirkende Zugkraft kennzeichnende Zugkraft-Größe und mindestens eine, die Bewegung des Fahrzeugs kennzeichnende Bewegungsgröße ermittelt wird, wobei eine der beiden Messungen während einer zugkraftfreien Phase erfolgt, während der die Anfahr-Kupplung zum Zweck einer Gangschaltung des Stufenwechselgetriebes geöffnet ist, und die andere der beiden Messungen während einer Zugkraft-Phase erfolgt, während der die Anfahr-Kupplung geschlossen ist und eine Zugkraft auf die Antriebsräder übertragen wird, und wobei mit den ermittelten Größen der beiden zeitlich versetzten Messungen die aktuelle Fahrzeugmasse berechnet wird.

4. Verfahren nach Anspruch 3, **dadurch gekennzeichnet, daß** die erste der beiden Messungen einen ersten Datenerfassungszeitraum umfaßt, die zweite der beiden Messungen einen zweiten Datenerfassungszeitraum umfaßt, die Dauer der beiden Datenerfassungszeiträume größer ist als eine Mindestdauer, die Zugkraft-Größe dem zeitlichen Integral der während des jeweiligen Datenerfassungszeitraums wirkenden Zugkraft entspricht, und die Bewegungsgröße der während des jeweiligen Datenerfassungszeitraums erfolgten Geschwindigkeitsänderung des Fahrzeugs entspricht.

5. Verfahren nach einem der Ansprüche 1 bis 4, **dadurch gekennzeichnet, daß** ein maximal zulässiger Wert (12) für eine Rutschzeit und/oder ein maximal zulässiger Wert (14) für eine Reibarbeit der Anfahr-Kupplung während des Anfahrvorgangs sowie ein zum Anfahren verfügbares Motormoment (10) ermittelt wird, daß, beginnend mit einer höchsten zum Anfahren geeigneten Gangstufe in einer Berechnungsschleife abhängig von der Übersetzung der Gangstufe (19), der Fahrzeugmasse (8), der fahrzustandsabhängigen Größe (6) und dem zum Anfahren verfügbaren Motormoment (10) Werte für die Rutschzeit (20) und/oder die Reibarbeit (22) vorausberechnet werden, daß die vorausberechneten Werte (20, 22) mit den maximal zulässigen Werten (12, 14) verglichen werden, daß die Berechnungsschleife mit der nächstkleineren zum Anfahren geeigneten Gangstufe wiederholt wird, wenn mindestens einer der vorausberechneten Werte (20, 22) größer als die maximal zulässigen Werte (12, 14) sind, und daß eine Gangstufe als Anfahr-Gangstufe ausgegeben wird, wenn die vorausberechneten Werte (20, 22) kleiner oder gleich den maximal zulässigen Werten (12, 14) sind.

6. Verfahren nach Anspruch 5, **dadurch gekennzeichnet, daß** die maximal zulässigen Werte (12, 14) für die Rutschzeit und/oder die Reibarbeit abhängig von der Fahrbahnsteigung, der Fahrzeugmasse (8) und/oder dem Belastungszustand der Kupplung (17) in der elektronischen Steuerungseinrichtung - vorzugsweise in einem Kennfeldspeicher - abgelegt sind.

**Claims**

1. Procedure for determining a starting ratio for a vehicle with a stepped multi-ratio transmission the input end of which is connected via a starting coupling (optionally closing) to an engine delivering a torque rating, and the output end of which is positively connected to the vehicle's drive wheels which transfer traction to the road surface, whereby the starting ratio determined by the electronic control equipment is dependent on at least the vehicle mass (8) and one other parameter (6) dependent on driving mode which includes the vehicle's gradeability resistance, **characterized in that** an actual value for this other drive-mode-dependent parameter (6) is determined continuously during travel from the vehicle weight (8), the prevailing level of tractive effort (4) and resultant level of vehicle acceleration (2), and **in that** when the vehicle is at a standstill, an appropriate starting ratio is determined.

**2.** Regarding procedure in accordance with claim 1, **characterized in that** the other driving mode dependent parameter (6) also includes the roll resistance of the vehicle.

**3.** Procedure in accordance with either claim 1 or 2, **characterized in that** the vehicle mass (8) is determined using a procedure which covers at least two measurements (with time offset) within one measurement time period, and that this procedure determines at least one tractive effort parameter which identifies the traction created by the input motor which acts on the vehicle's driving wheels in the direction of motion and at least one parameter for movement which identifies vehicle motion, whereby one of the two measurements is conducted during a phase with no tractive effort while the starting clutch is opened for the stepped multi-ratio transmission to select a gear, and the other of the two measurements is conducted during a phase containing tractive effort while the starting clutch is closed and tractive effort is transmitted to the driving wheels, and whereby the parameters determined during the two measurements (with time offset) are used to calculate the prevailing vehicle mass.

**4.** Procedure in accordance with claim 3, **characterized in that** the first of the two measurements includes an initial data recording time period, the second of the two measurements includes a second data recording time period, the length of the two data recording time period is greater than a minimum period, the tractive effort parameter corresponds to the time integral of the tractive effort present during the relevant data recording time period, and the movement parameter corresponds to the change in vehicle speed during the relevant data recording period.

**5.** Procedure in accordance with any one of claims 1 to 4,
    **characterized in that** a maximum permissible
    value (12) is determined for a slip time and/or a maximum permissible
    value (14) is determined for friction effort of the *starting clutch during*
    the starting process is well as the engine torque (10) available for starting, **in that**, starting with the highest ratio suitable for starting, values for the slip time (20) and/or friction effort (22) are pre-calculated in a calculating loop dependent on the ratio of the relevant gear (19) from vehicle mass (8), the operating mode dependent parameter (6) and the engine torque available for starting (10), **in that** the pre-calculated values (20, 22) are compared with the maximum permissible values (12, 14),
    **in that** the calculation loop is repeated with the next highest ratio suitable for starting, if at least one of the pre-calculated values (20, 22) is greater than the maximum permissible values (12, 14), and **in that** a ratio is output as the starting ratio if the pre-calculated values (20, 22) are less than or equal to the maximum permissible values (12, 14).

**6.** Procedure in accordance with claim 5, **characterized in that** the maximum permissible values (12, 14) for slip time and / or friction effort are saved in the electronic control equipment - preferably in a characteristics memory - depending on the road surface incline, the vehicle mass (8) and / or the low status of the clutch (17).

## Revendications

**1.** Procédé pour calculer un étage de vitesse de démarrage pour un véhicule équipé d'une transmission à changement échelonné comprenant plusieurs étages de vitesse,
    dans lequel la transmission à changement échelonné peut être reliée, côté entrée, à un moteur d'entraînement produisant un couple de moteur, par un embrayage de démarrage qui peut être fermé sélectivement, tandis que, côté sortie, elle est reliée cinématiquement aux roues motrices du véhicule, qui transmettent une force de traction,
    dans lequel l'étage de vitesse de démarrage est calculé par un dispositif de commande électronique, au moins en fonction de la masse (8) du véhicule et d'une autre grandeur (6) qui dépend de l'état de marche et qui comprend la résistance de pente montante du véhicule, **caractérisé en ce qu'**une valeur actuelle de l'autre grandeur (6) qui dépend de l'état de marche est calculée continuellement pendant la marche à partir de la masse (8) du véhicule, d'une force de traction actuelle (6) et d'une accélération actuelle du véhicule (2) qui en résulte, et **en ce qu'**un étage de vitesse de démarrage approprié à l'état d'arrêt du véhicule est calculé sur cette base.

**2.** Procédé selon la revendication 1, **caractérisé en ce que** l'autre grandeur fonction de l'état de marche (6) comprend aussi la résistance au roulement du véhicule.

**3.** Procédé selon l'une des revendications 1 ou 2, **caractérisé en ce que** la masse (8) du véhicule est calculée avec un procédé qui comprend au moins deux mesures décalées dans le temps dans les limites d'un espace de temps de mesure, sous l'effet desquelles on calcule au moins une grandeur de force de traction produite par le moteur d'entraînement, qui caractérise la force de traction agissant sur les roues motrices du véhicule dans le sens du mouvement, et au moins une grandeur de mouvement qui caractérise le mouvement du véhicule, une des deux mesures s'effectuant pendant une phase exempte de force de traction pendant laquelle l'embrayage de démarrage est ouvert pour l'exécution d'un changement de vitesse de la transmission à changement échelonné, et l'autre des deux mesures s'effectuant pendant une phase de force de traction pendant laquelle l'embrayage de démarrage est fermé et où une force de traction est transmise aux roues motrices, et la masse actuelle du véhicule étant calculée avec les grandeurs des deux mesures décalées dans le temps qui sont obtenues.

4. Procédé selon la revendication 3, **caractérisé en ce que** la première des deux mesures comprend un premier laps de temps de saisie de données, la deuxième des deux mesures comprend un deuxième laps de temps de saisie de données, la durée des deux laps de temps de saisie des données est supérieure à une durée minimale, la grandeur de la force de traction correspond à l'intégrale par rapport au temps de la force de traction qui agit pendant le laps de temps de saisie des données correspondant, et la grandeur de mouvement correspond à la variation de la vitesse du véhicule qui s'est produite pendant le laps de temps de saisie des données correspondant.

5. Procédé selon l'une des revendications 1 à 4, **caractérisé en ce qu'**on calcule une valeur maximale admissible (12) pour un temps de patinage et/ou une valeur maximale admissible (14) pour un travail de friction de l'embrayage de démarrage pendant le processus de démarrage, ainsi qu'un couple moteur (10) disponible pour le démarrage,

**en ce que**, dans une boucle de calcul, des valeurs sont préalablement calculées pour le temps de patinage (20) et/ou pour le travail de friction (22), en fonction du rapport de transmission de l'étage de vitesse (19), de la masse (8) du véhicule, de la grandeur (6) fonction de l'état de marche, et du couple moteur (10) disponible pour le démarrage, en commençant à un étage de vitesse maximum approprié pour le démarrage,

**en ce que** les valeurs préalablement calculées (20, 22) sont comparées aux valeurs maximales admissibles (12, 14),

**en ce que** la boucle de calcul est répétée avec l'étage de vitesse approprié pour le démarrage qui est immédiatement inférieur lorsque au moins une des valeurs préalablement calculées (20, 22) est supérieure aux valeurs maximales admissibles (12, 14), et

**en ce qu'**un étage de vitesse est émis en qualité d'étage de vitesse de démarrage lorsque les valeurs préalablement calculées (20, 22) sont inférieures ou égales aux valeurs maximales admissibles (12, 14).

6. Procédé selon la revendication 5, **caractérisé en ce que** les valeurs maximales admissibles (12, 14) pour le temps de patinage et/ou pour le travail de friction sont enregistrées dans le dispositif de commande électronique, de préférence dans une mémoire de diagrammes caractéristiques, en fonction de la pente montante de la chaussée, de la masse (8) du véhicule et/ou de l'état de charge de l'embrayage (17).

EP 1 108 165 B1

Fig. 1

Fig. 2